(19) Europäisches Patentamt
European Patent Office
Office européen des brevets

(11) **EP 2 892 860 B1**

(12) **EUROPÄISCHE PATENTSCHRIFT**

(45) Veröffentlichungstag und Bekanntmachung des Hinweises auf die Patenterteilung:
**19.08.2020 Patentblatt 2020/34**

(21) Anmeldenummer: **12768710.1**

(22) Anmeldetag: **06.09.2012**

(51) Int Cl.:
*C04B 5/06* (2006.01)   *C04B 7/147* (2006.01)
*C21B 3/08* (2006.01)   *C21C 5/36* (2006.01)

(86) Internationale Anmeldenummer:
**PCT/EP2012/003744**

(87) Internationale Veröffentlichungsnummer:
**WO 2014/037020 (13.03.2014 Gazette 2014/11)**

(54) **VERFAHREN ZUR AUFBEREITUNG VON STAHLWERKSCHLACKEN**

METHOD FOR THE TREATMENT OF STEELWORK SLAG

PROCÉDÉ POUR TRAITER DES SCORIES D'ACIÉRIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.07.2015 Patentblatt 2015/29**

(73) Patentinhaber:
• **Loesche GmbH**
  **40549 Düsseldorf (DE)**
• **Bundesrepublik Deutschland, vertreten duch das Bundesministerium für Wirtschaft und Energie, vertreten durch die Bundesanstalt für Material.**
  **12205 Berlin (DE)**

(72) Erfinder:
• **WULFERT, Holger**
  **10719 Berlin (DE)**
• **LUDWIG, Horst-Michael**
  **96317 Kronach (DE)**

(74) Vertreter: **Wunderlich & Heim Patentanwälte Partnerschaftsgesellschaft mbB**
**Irmgardstrasse 3**
**81479 München (DE)**

(56) Entgegenhaltungen:
**WO-A1-95/07365      WO-A1-96/24696
WO-A1-2011/107124    DE-A1- 2 728 289
DE-A1- 2 829 370**

• **J. Stark & B. Wicht: "Zement und Kalk: der Baustoff als Werkstoff", 1. Januar 2000 (2000-01-01), Birkhäuser Verlag, Basel Boston Berlin, XP002697525, ISBN: 3-7643-6216-2 Seite 6 - Seite 7; Tabelle 2.2.1;2.2.2**
• **TSAKIRIDIS P E ET AL: "Utilization of steel slag for Portland cement clinker production", JOURNAL OF HAZARDOUS MATERIALS, ELSEVIER, AMSTERDAM, NL, Bd. 152, Nr. 2, 1. April 2008 (2008-04-01) , Seiten 805-811, XP026052157, ISSN: 0304-3894, DOI: 10.1016/J.JHAZMAT.2007.07.093 [gefunden am 2008-04-01]**

**Beschreibung**

Die Erfindung betrifft ein Verfahren zur Aufbereitung von Stahlwerkschlacken zum Herstellen eines hydraulischen mineralischen Bindemittels mit hohem Erhärtungspotential und zum Rückgewinnen von Eisen gemäß dem Patentanspruch 1.

Stahlwerkschlacken, welche auch als LD-Schlacken, LSD oder SWS bezeichnet werden, können verfahrensbedingt noch sehr große Mengen an Eisen enthalten, welches zum Teil in metallischer Form, jedoch hauptsächlich in Form von Oxiden mineralisch gebunden in der Schlacke vorhanden ist. Diese in der Schlacke vorliegenden Eisenoxide können nicht auf einem rein mechanischen Weg zurückgewonnen werden, da sie fest in der Schlackenmatrix eingebunden sind und zunächst durch eine thermochemische Reduktion in die elementare metallische Form überführt werden müssen. Die Schlackenmatrix besteht hauptsächlich aus den typischen Oxiden Calciumoxid, Siliziumdioxid und Aluminiumoxid. Im Gegensatz zu anderen Schlackenformen, wie beispielsweise der Hochofenschlacke, treten sie allerdings nicht in hydraulisch aktiven Phasen auf und sind daher nicht für eine hochwertige Verwertung im Zement geeignet. Daher werden sie fast ausschließlich als Stückschlacke, das heißt Splitt, im Straßen- und Wegebau verwendet.

Aus der EP 1 370 501 B1 ist beispielsweise ein Verfahren zur Behandlung von Stahlschlacke bekannt, um der Schlacke die Eigenschaften eines hydraulischen Bindemittels zu verleihen. Das entstehende Produkt wird als wenigstens äquivalent zu Portlandzementklinker bezeichnet. Dabei wird die Stahlschlacke, welche bezogen auf das Gesamtgewicht der Schlacke wenigstens 45 M.-% Calciumoxid und weniger als 30 M.-% $Fe_2O_3$ enthält, durch Oxidation mit Sauerstoff oder Luft unter einem Druck von 1 bis 15 bar bei einer Temperatur von 1.650 °C bis 1.400 °C behandelt. Zu dieser Schlacke wird eine Kalkquelle zugegeben, welche gegebenenfalls mit einer Siliziumdioxidquelle oder einer Aluminiumoxidquelle ergänzt ist. Die Anteile der Kalkquelle und gegebenenfalls der Siliziumdioxid- oder Aluminiumoxidquelle sind so gewählt, dass die Schlacke nach der Umwandlung und bei Umgebungstemperatur einen $Fe_2O_3$-Gehalt von wenigstens 13 M.-% und eine mineralogische Zusammensetzung aufweist, die wenigstens 40 M.-% der mineralogischen Phase $C_3S$ und mehr als 10 M.-% Calciumchlorid/-fluorid in Form der mineralogischen Phasen $C_2F$ oder $C_4AF$ enthält.

Nachteilig an diesem Verfahren ist, dass das in der Schlacke vorhandene Eisen nicht rückgewonnen wird.

Ein anderes Verfahren zur Aufbereitung von Stahlwerksschlacken ist in der EP 1 697 271 B1 beschrieben. Hierbei soll ein hydraulisches Bindemittel hergestellt werden, welches mindestens 25 M.-% Calcium- und Magnesiumalumosilicate, mindestens 5 M.-% mineralische Oxide und/oder Halogenide sowie maximal 31 M.-% Aluminiumoxid, maximal 10 M.-% Calciumalumoferrit und maximal 0,01 M.-% Kohlenstoff aufweist. Um dieses Produkt zu erhalten, sollen Ausgangsstoffe, zu welchen auch Stahlwerksschlacken zählen, in entsprechenden Mengen in einer reduzierenden Atmosphäre geschmolzen werden. Das so entstandene Produkt soll isoliert werden. Dies kann sowohl mittels einer schnellen Abkühlung, beispielsweise mit Wasser oder Luft, sowie auch mittels einer langsamen Abkühlung erfolgen. WO95/07365 und WO96/24696 zeigen Verfahren zur Herstellung von Roheisen oder Stahl und Zementklinker aus Schlacken. DE2829370A1 zeigt ein Verfahren zur Aufbereitung von aus dem Sauerstoff-Frischen von Hämatitroheisen anfallenden basischen Schlacken für die Herstellung von Portlandzement. DE2728289 zeigt ein Verfahren zur Herstellung von Stahlschlackenzement. Tsakiridis, P.E. et al in "Utilization of steel slag for Portland cement clinker production" (2008) in Jour. of Hazadous Materials, 152, Seite 805-811 zeigen die Verwendung von Stahlschlacke zur Herstellung von Portlandzement-Klinker.

Unabhängig von der Art der Abkühlung werden wohl keine nennenswerten Mengen der Hauptklinkerphase Alit ausgebildet. Ob und wie möglicherweise hierbei entstandenes elementares Eisen abgetrennt wird, ist nicht beschrieben.

Der Erfindung liegt daher die **Aufgabe** zugrunde ein Verfahren zur Aufbereitung von Stahlwerkschlacken anzugeben, bei dem sowohl ein hydraulisches mineralisches Bindemittel mit hohem Erhärtungspotential hergestellt sowie Eisen rückgewonnen werden kann. Des Weiteren liegt der Erfindung die Aufgabe zugrunde, ein hydraulisches mineralisches Bindemittel mit hohem Erhärtungspotential bereitzustellen.

Diese Aufgabe wird erfindungsgemäß durch ein Verfahren zur Aufbereitung von Stahlwerkschlacken mit den Merkmalen des Anspruch 1 gelöst. Vorteilhafte Ausführungsformen der Erfindung sind in den Unteransprüchen und der Beschreibung angegeben.

Bei dem erfindungsgemäßen Verfahren ist es zuerst vorgesehen, ein Aufgabeprodukt bereitzustellen, welches Stahlwerkschlacke mit Eisenverbindungen, insbesondere in oxydischer Form, und MnO aufweist, wobei das MnO in der Stahlwerkschlacke enthalten sein kann. Dieses Aufgabeprodukt wird als Schmelze weiterverarbeitet, indem Reduktionsmittel in die Schmelze zum Reduzieren der Eisenverbindungen eingebracht werden, um im mineralischen Schmelzanteil einen Kalkstandard zwischen 90 und 110 zu erreichen, wobei das Einbringen des Reduktionsmittels in einer nichtoxidierenden Atmosphäre durchgeführt wird. Anschließend wird die Schmelze definiert abgekühlt, wobei die Schmelze in frühestens 15 min erstarrt. Dann wird elementares Eisen aus der erstarrten Schmelze mechanisch abgetrennt. Anschließend wird die erstarrte Schmelze, welche einen verminderten Eisengehalt aufweist, einer Verwendung als hydraulisches mineralisches Bindemittel zugeführt.

Im Sinne der Erfindung wird unter Aufgabeprodukt die Stahlwerkschlacke sowie, falls notwendig, weitere Korrekturkomponenten wie MnO, verstanden. Hierbei kann auch bereits ausreichend MnO in der Schlacke vorhanden sein, so dass keine Korrekturkomponenten hinzugegeben werden müssen. Dies ist zumindest bei einigen untersuchten Stahlwerksschlacken der Fall. Meist liegen die Eisenverbindungen in der Stahlwerkschlacke als Eisenhalogenide, Eisensulfide, Eisenselenide sowie insbesondere Eisenoxide, wie FeO, $Fe_2O_3$ oder $Fe_3O_4$, vor.

Das Aufgabeprodukt kann in geeigneten Behältnissen entweder zur Schmelze erhitzt oder auch in schmelzflüssigem Zustand extern bereitgestellt werden. Zum Aufschmelzen des Aufgabeproduktes oder zum weiteren Erhitzen der Schmelze kann beispielsweise ein Lichtbogenofen, insbesondere in einer dreiphasigen geschlossenen Form, verwendet werden.

Durch das Einbringen der Reduktionsmittel werden die Eisenverbindungen in die elementare metallische Form überführt. Hierdurch wird im mineralischen Schmelzanteil ein Kalkstandard in einem Bereich zwischen 90 und 110, bevorzugt zwischen 95 und 105, erreicht. Unter mineralischem Schmelzanteil kann hierbei die Schmelze abzüglich des elementaren Eisens verstanden werden. Der Kalkstandard (KSt) gibt den im Rohstoff oder Klinker tatsächlich vorhandenen CaO-Gehal in Prozentanteilen desjenigen CaO-Gehalts an, der unter technischen Brenn- und Kühlbedingungen im Höchstfall an $SiO_2$, $Al_2O_3$ und $Fe_2O_3$ gebunden werden kann. Er ist über die Gleichung

$$KSt = \frac{100 \cdot CaO}{2,80 \cdot SiO_2 + 1,1 \cdot Al_2O_3 + 0,7 \cdot Fe_2O_3}$$

definiert.

Das Durchführen der Reduktion in einer nicht-oxidierenden Atmosphäre verhindert die Rückoxidation des bereits reduzierten Eisens und erhöht damit die Ausbeute an elementarem Eisen. Dies trägt wieder zum Erreichen des Kalkstandards bei.

Nach dem Erstarren der Schmelze kann das elementare Eisen mechanisch abgetrennt und einer weiteren Verwertung zugeführt werden. Ein großer Teil des Eisens setzt sich aufgrund der größeren Dichte gegenüber der restlichen Schlacke im unteren Bereich des Schmelzgefäßes ab. Ein anderer Teil bleibt in Form von Tröpfchen und Einschlüssen in der erkalteten Schlacke zurück.

Die Schlacke mit dem verminderten Eisengehalt kann als hydraulisches mineralisches Bindemittel verwendet werden. Dieses Bindemittel wird im Weiteren als LDS-Bindemittel bezeichnet.

Mit dem erfindungsgemäßen Verfahren kann auf einfache und effiziente Weise ein hoher Anteil von elementarem Eisen aus Stahlwerkschlacken zurückgewonnen werden und ferner ein äußerst reaktives hydraulisches mineralisches Bindemittel erhalten werden, welches hervorragend als Kompositmaterial für hochwertige Bindemittel geeignet ist. Dieses LDS-Bindemittel zeichnet sich durch eine sehr hohe Reaktivität und Erhärtungsfähigkeit aus. Es weist einen Alit-Anteil ($C_3S$) von mindestens 40 M.-% auf.

Der Erfindung liegen im Wesentlichen drei miteinander wechselwirkende Grundideen zugrunde: Erstens das Vorsehen von MnO in der Schmelze, zweitens das Reduzieren des Eisens, bis im mineralischen Schmelzanteil der angegebene Kalkstandard erreicht wird, und drittens das langsame definierte Abkühlen.

Der definierte Abkühlprozess bewirkt die Bildung von sehr großen Alitkristallen. Diese können bis zu einem Millimeter groß sein. Auch sind an den Rändern der Kristalle keine Rückbildungsprozesse zu Belit ($C_2S$) und Freikalk (CaO) bei Untersuchungen zu erkennen. Unter konventionellen Klinkerherstellbedingungen führen langsame Abkühlprozesse zu einem Zerfall des Alits in Belit und Freikalk. Vor diesem Hintergrund ist innerhalb der Zementherstellung eine aufwendige Klinkerkühlung notwendig.

Die trotz der großen Kristalle besonders hohe Reaktivität der erhaltenen Alit-Phase wird auf die Anwesenheit von $Mn^{2+}$-Ionen zurückgeführt, welche in die Gitterstruktur der Alit-Phase eingebaut werden und diese stören, so dass das Erhärtungspotential des LDS-Bindemittels, welches insbesondere auf die Alit-Phase zurückzuführen ist, erheblich gesteigert wird.

Bei der erfindungsgemäßen Verarbeitung der Schmelze unter reduzierenden Bedingungen liegt das Mn in seiner 2-wertigen Form als $Mn^{2+}$ vor. Dadurch wird ein Einbau in das Gitter des Alits möglich, wobei Ca im Gitter ersetzt wird. Es werden hierbei Einbauraten bis 3% erreicht.

Dies ist bei der herkömmlichen Zementklinkerherstellung nicht möglich. Sofern im Zementrohstoff Mn-Verbindungen vorhanden sind, wird das Mn durch den oxidativen Prozess bei der Zementklinkerherstellung als $Mn^{3+}$ vorliegen. Dadurch wird das $Mn^{3+}$ tendenziell auf die Gitterplätze des Fe im $C_4AF$ eingebaut wird. Ein Einbau von $Mn^{3+}$ auf die Ca-Gitterplätze des Alits oder des Belits ist nicht möglich.

Folglich ist eine vergleichbare Reaktivitätssteigerung des Alits bei herkömmlicher Zementklinkerherstellung unter oxidierender Atmosphäre nicht möglich, da das Mangan, wenn vorhanden, als $Mn^{3+}$ vorliegt. Gleiches gilt auch für alle Verfahren zur Behandlung von Stahlwerksschlacken, die unter oxidierenden Bedingungen durchgeführt werden.

Die hohe Stabilität des Alits kann zum einen dadurch begründet werden, dass das Ausbilden des Alits im LDS-Bindemittel im Gegensatz zum herkömmlichen Sinterprozeß in der Zement-Klinkerherstellung nach der Erfindung langsam aus der Schmelzphase heraus geschieht. Zum anderen wird die Stabilität auf den Einbau des $Mn^{2+}$ zurückgeführt.

Schlussendlich spielt auch noch der geforderte Kalkstandard eine entscheidende Rolle für den hohen Alit-Anteil und die hohe Reaktivität des erfindungsgemäßen LDS-Bindemittels.

Grundsätzlich kann eine beliebige Menge an MnO im Aufgabeprodukt vorhanden sein. Vorteilhaft ist aber, wenn das Aufgabeprodukt 0,1 M.-% bis 10 M.-%, insbesondere 0,5 M.-% bis 5 M.-% MnO aufweist. Bei diesem Gehalt an Manganoxid ist gewährleistet, dass eine signifikante Menge an $Mn^{2+}$-Ionen in das Kristallgitter der Alit-Phase eingebaut wird und dadurch die Kristallstruktur stört.

Es ist vorteilhaft, wenn in dem Aufgabeprodukt bis zu 5 M.-% $Al_2O_3$ und/oder 30 bis 50 M.-% CaO und/oder 10 bis 20 M.-% $SiO_2$ enthalten sind. Noch vorteilhafter enthält das Aufgabeprodukt 3 bis 5 M.-% $Al_2O_3$ und/oder 35 bis 45 M.-% CaO und/oder 15 bis 20 M.-% $SiO_2$.

Bei diesen Phasenzusammensetzungen wird die Bildung der Alit-Phase unter thermochemischen Gesichtspunkten begünstigt. Ferner wird in diesen Konzentrationsbereichen der beteiligten Oxide mit hoher Wahrscheinlichkeit ein Kalkstandard zwischen 90 und 110, beziehungsweise noch bevorzugter zwischen 95 und 105, erreicht. Sollte die genannte Zusammensetzung nicht bereits in dem angelieferten Stahlwerkschlackenmaterial enthalten sein, so können die im Unterschuss vorliegenden Oxide gegebenenfalls vor oder während des Schmelzprozesses hinzugefügt werden.

Vorteilhafterweise hat die Schmelze vor und/oder während der Reduktion eine Temperatur von etwa 1.600 °C bis etwa 1.800 °C, insbesondere von 1.650 °C bis 1.750 °C. In diesem Temperaturbereich sind sämtliche Komponenten des Aufgabeproduktes, insbesondere die oxidischen Anteile, vollständig aufgeschmolzen und die Reduktionsreaktion weist eine ausreichend hohe Geschwindigkeit auf, um auch unter energetischen und thermochemischen Gesichtspunkten einen raschen Ablauf des Reduktionsprozesses zu gewährleisten.

Die nicht-oxidierende Atmosphäre kann eine reduzierende Atmosphäre sein. Dadurch wird der Reduktionsprozess, welcher hauptsächlich durch die zugeführten Reduktionsmittel in fester Form stattfindet, weiter unterstützt.

Es ist bevorzugt, wenn als Reduktionsmittel Kohlenstoff, Silizium und/oder andere Metalle oder Halbmetalle verwendet werden. Als Kohlenstoffmodifikation eignet sich insbesondere Petrolkoks, da es eine sehr hohe spezifische Oberfläche und dementsprechend eine hohe Reaktivität aufweist. Silizium, Calcium und Aluminium haben ferner den Vorteil, dass die Oxide Bestandteile der Schlacke bilden können.

Zumindest ein Teil des Reduktionsmittels kann in die Schmelze eingeblasen werden, beispielsweise mittels eines Schutzgasstroms. Zum Einblasen des Reduktionsmittels in die Schmelze eignen sich bei Verwendung eines Lichtbogenofens insbesondere Hohlelektroden. Neben einer besonders effizienten Verteilung des Reduktionsmittels in der Schmelze wird durch das Einblasen ein weiterer Beitrag zur Durchmischung selbiger erreicht. Durch die Verwendung eines Schutzgases wird vermieden, dass unerwünschte Nebenreaktionen, insbesondere Oxidationen des Reduktionsmittels sowie der in der Schmelze enthaltenen oxidischen Komponenten stattfinden. Als Schutzgas eignet sich beispielsweise Argon. Gegebenenfalls kann ein anderer Teil des Reduktionsmittels mit der Aufgabeschlacke bereits vorab in einem bestimmten Verhältnis gemischt werden.

Bei der Verwendung von Kohlenstoff als Reduktionsmittel kann bei der Reduktion der Oxide als Nebenprodukt Kohlenmonoxid und Kohlendioxid entstehen. Diese Gase entweichen aus der Schmelze, was zum Schäumen dieser führen kann. Um das Schäumen zu verringern, kann es vorteilhaft sein, Borax in die Schmelze einzubringen.

In einer bevorzugten Ausführungsform des erfindungsgemäßen Verfahrens wird nach dem Reduzieren und vor dem Erstarren der Schmelze flüssiges elementares Eisen abgetrennt. Da flüssiges elementares Eisen eine höhere Dichte aufweist als die Schmelzphase, sammelt es sich am Boden des Schmelzofens an und kann von dort relativ einfach abgezogen werden. Unter Schmelzofen oder Schmelzaggregat kann im Rahmen der Erfindung ein Behälter zum Aufnehmen der Schmelzphase verstanden werden, der es ermöglicht, durch zusätzlichen Energieeintrag die Schmelze im flüssigen Zustand zu halten, beispielsweise ein Lichtbogenofen.

Grundsätzlich kann die Schmelze beliebig langsam abgekühlt werden. Bevorzugt wird jedoch, wenn die Schmelze nach spätestens vier Stunden, insbesondere zwei Stunden, erstarrt ist. In diesem Zeitraum können sich thermodynamisch stabile mineralogische Phasen, insbesondere von Alit, ausbilden

Das definierte Abkühlen kann in Abkühlbehältnissen erfolgen. Hierfür bieten sich zum Beispiel Kokillen oder andere Behältnisse an, mit denen man den Abkühlprozess zeitlich beeinflussen kann. Die Abkühlbehältnisse können von speziellen Gießmaschinen beschickt werden, die wiederum aus dem Schmelzaggregat befüllt werden.

In einer bevorzugten Ausführungsform des erfindungsgemäßen Verfahrens erfolgt das mechanische Abtrennen des elementaren Eisens mittels eines Mahlprozesses und eines Sichtprozesses. Für diesen Verfahrensschritt ist insbesondere ein Verfahren geeignet, wie es in der internationalen Patentanmeldung WO 2011/107124 A1 offenbart ist. Das Eisen wird während des Mahlprozesses freigelegt, nachfolgend auf einem Mahlteller durch die Dichteunterschiede zwischen dem Eisen und der mineralogischen Matrix separiert, anschließend über den Tellerrand ausgeschleust und fakultativ durch nachfolgende Sortier- und Sichtprozesse weiter angereichert. Für die Zerkleinerung und Desagglomeration der erstarrten Schmelze wird eine Wälzmühle bevorzugt des LOESCHE-Typs verwendet.

Außerdem betrifft die Erfindung ein nicht beanspruchtes, hydraulisches mineralisches Bindemittel, welches eine mineralogische Zusammensetzung von mindestens 40 M.-% Alit ($C_3S$) und einen Kalkstandard von etwa 90 bis 110 aufweist. Bevorzugt ist ein höherer Alit-Anteil von 50 M.-% insbesondere 60 M.-%. Das nicht beanspruchte, hydraulische mineralische Bindemittel kann mittels des erfindungsgemäßen Verfahrens hergestellt werden und wird im Rahmen der Erfindung auch als LDS-Bindemittel bezeichnet.

Das LDS-Bindemittel weist eine mineralogische Zusammensetzung von maximal 30 M.-% Glasphasen auf. Sie leisten keinen Beitrag zur Abbindefähigkeit des Bindemittels, können jedoch freien Kalk, das heißt Calciumoxid, binden und dadurch den Kalkstandard erhöhen.

Die Erfindung wird nachfolgend anhand eines schematischen exemplarischen Ausführungsbeispiels unter Bezugnahme auf die Figuren noch näher erläutert. Hierbei zeigt

Fig. 1    ein schematisches Flussdiagramm einer Ausführungsform des erfindungsgemäßen Verfahrens; und

Fig. 2    ein Diagramm zu Festigkeitsuntersuchungen des erfindungsgemäßen hydraulischen mineralischen Bindemittels.

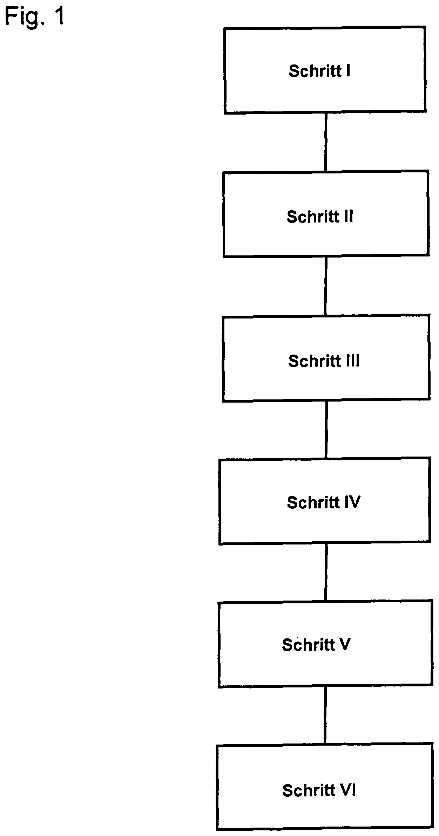

Im Flussdiagramm nach Figur 1 wird im Schritt I ein Aufgabeprodukt bereitgestellt. Dieses weist im Wesentlichen LD-Schlacke auf. Das Aufgabeprodukt hat einen MnO-Gehalt im Bereich zwischen 1 M.-% bis 5 M.-%. Viele LD-Schlacken, die auch als SWS bezeichnet werden, haben bereits einen MnO-Gehalt im gewünschten Bereich. Anderenfalls wird das MnO der Schlacke zugegeben. Bereits in diesem Schritt können dem Aufgabeprodukt Reduktionsmittel zugefügt werden. Hierfür bietet sich z. B. Petrokoks an.

In dem anschließenden Schritt II erfolgt, sofern notwendig, die Verarbeitung des Aufgabeproduktes zur Schmelze. Die Schlacke kann entweder bereits im schmelzflüssigen Zustand aus einem vorgelagerten Prozess erhalten werden oder auch in erkalteter fester Form vorliegen. Ein Aufschmelzen und/oder Erhitzen der Schlacke kann in einem Lichtbogenofen erfolgen. Er kann im Widerstandsbetrieb mit einer feuerfesten Zustellung aus Graphit oder kohlenstoffhaltigem feuerfesten Material betrieben werden. Der Lichtbogenofen kann auch als Schmelzaggregat bezeichnet werden.

Die Schmelze sollte eine Temperatur von etwa zwischen 1.650 °C bis 1.750 °C erreichen, bevor im Schritt III mit der Zugabe von Reduktionsmitten begonnen wird.

Durch die Reduktion der Eisenverbindungen in der Schmelze können Kohlenmonoxid und/oder Kohlendioxid entstehen, welche als Gase aus der Schmelze entweichen. Dies kann zu einem Schäumen der Schmelze führen. Um das Schäumen zu vermindern, kann eine geringe Menge an Borax der Schmelze zugeführt werden. Hierdurch wird die Viskosität der Schmelze verringert.

Zur Unterdrückung der Re-Oxidation des reduzierten Eisens wird die Ofenatmosphäre mit einem Inertgas, beispielsweise mit Argon, angereichert. Das Argon kann auch direkt in die Schmelze eingeleitet werden. Dann kann ein Teil der Reduktionsmittel auch direkt mit dem Argonstrom in die Schmelze eingeblasen werden. Das durch die Schmelze strömende Argon bewirkt eine Durchwirbelung des Schmelzbades, was sich auf die Metallabscheidung positiv auswirkt.

Sobald im Wesentlichen die gesamten Eisenverbindungen, die im Aufgabeprodukt vorlagen, reduziert wurden, sollte der restliche mineralische Schmelzanteil einen Kalkstandard zwischen 90 und 110 aufweisen. Dies ist bei der Zusammenstellung des Aufgabeproduktes zu beachten. Der gewünschte Kalkstandard kann bei vielen LD-Schlacken erreicht werden.

Im Schritt IV wird die flüssige Schmelze, beispielsweise über eine Gießvorrichtung, in spezielle bkühleinrichtungen, wie Kokillen, überführt und dort in einem Zeitraum von mindestens fünfzehn Minuten bis zu etwa zwei Stunden langsam abgekühlt. Ein Teil des Eisens - ca. 80% - setzt sich sowohl im Schmelzaggregat wie auch in den Abkühleinrichtungen als separate Phase am Boden ab. Hier kann es noch im flüssigen Zustand abgetrennt werden. Ein anderer Teil der Metallphase verbleibt jedoch auch nach dem Abkühlen in Form von Tröpfchen und Einschlüssen in dem mineralischen Anteil, so dass zur Erhöhung der Metallausbeute deren mechanische Aufbereitung notwendig ist.

Dieses mechanische Abtrennen von elementarem Eisen geschieht in Stufe V durch einen Mahlprozess mittels einer LOESCHE-Wälzmühle und einer anschließenden Sichtung. Hierbei kann das Eisen aufgrund des Dichteunterschieds zum mineralogischen Anteil abgetrennt werden. Es bietet sich hierbei insbesondere das in der WO 2011/107124 A1 beschriebene Verfahren an.

Der restliche mineralische Anteil ist das nicht beanspruchte LDS-Bindemittel, welches in Stufe VI vorliegt. Es kann als hochwertiges hydraulisches mineralisches Bindemittel verwendet werden.

In der Tabelle 1 ist die chemische Zusammensetzung eines Aufgabeproduktes, welches eine unbehandelte LD-Schlacke ist, sowie das mittels des erfindungsgemäßen Verfahrens erhaltene LDS-Bindemittel aufgeführt. Hierbei sind die Werte jeweils in M.-% angegeben.

Tabelle 1: Chemische Analyse der Ausgansschlacke und des LDS-Bindemittels in M.-%

|  | Ausgangsschlacke (unbehandelt) | LDS-Bindemittel |
|---|---|---|
| $SiO_2$ | 13,9 | 19,6 |
| $Al_2O_3$ | 1,7 | 2,7 |

(fortgesetzt)

| | Ausgangsschlacke (unbehandelt) | LDS-Bindemittel |
|---|---|---|
| $Fe_2O_3$ | 28,8 | 2,7 |
| CaO | 42,7 | 62,3 |
| MgO | 3,3 | 3,4 |
| $TiO_2$ | 0,47 | 0,72 |
| MnO | 5,2 | 3,89 |
| $K_2O$ | 0 | 0,04 |
| $Na_2O$ | 0,02 | 0,29 |
| $SO_3$ | 0,1 | 0,1 |
| $S^{2-}$ | 0,1 | 0,31 |
| $P_2O_5$ | 1,07 | 1,12 |

Nach der Tabelle 1 ergibt sich ein Kalkstandard von 70,1 für die Ausgangschlacke und von 104,3 für das LDS-Bindemittel. In der Tabelle 2 ist die kristalline Zusammensetzung der Ausgangsschlacke und des LDS-Bindemittels in M.-% wiedergegeben.

Tabelle 2: Phasenzusammensetzung der Ausgangsschlacke und des LDS-Bindemittels nach Rietveld in M.-%

| | Ausgangsschlacke (unbehandelt) | LDS-Bindmittel |
|---|---|---|
| Alit, $C_3S$ | 5,1 | 66,1 |
| Belit, $C_2S$ | 22,2 | 9,8 |
| $C_{12}A_7$ | 0,6 | - |
| $C_3A$ | 2,2 | 5,3 |
| $C_4AF$ | 23,2 | 1,2 |
| XRD-amorph | 38,6 | 11,8 |

Wie der Tabelle 2 entnommen werden kann, ist es mit dem erfindungsgemäßen Verfahren möglich, einen hohen Alit-Anteil von bis zu 66 M.-% im LDS-Bindemittel zu erhalten. Zu unterstreichen ist auch, dass in dem erfindungsgemäßen Verfahren die Bildung von anderen weniger reaktiven Phasen wie beispielsweise Belit ($C_2S$) reduziert wird. Die Belit-Phase leistet zwar ebenfalls einen Beitrag zur Festigkeitsbildung des LDS-Bindemittels, jedoch in geringerem Ausmaß und zu späteren Zeiten als die Alit-Phase. Je höher der Alit-Anteil in einem hydraulischen mineralischen Bindemittel ist, desto höher ist sein Erhärtungsvermögen und umso universeller ist seine Eignung als Baumaterial.

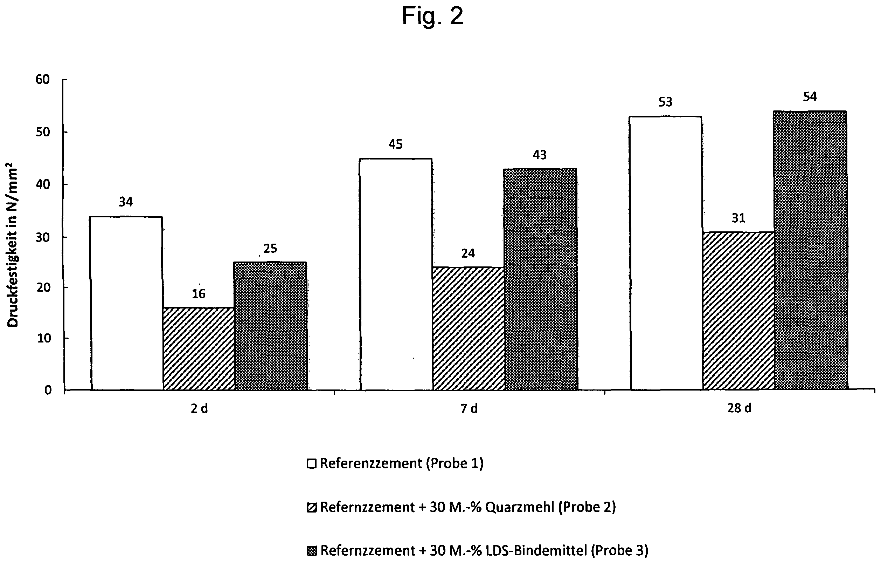

Die gute Reaktivität des LDS-Bindemittels wurde durch Festigkeitsuntersuchungen gemäß DIN EN 196 an Normmörtelprismen nach 2, 7 und 28 Tagen nachgewiesen. Die Ergebnisse der Festigkeitsuntersuchungen sind in Figur 2 dargestellt.

Es wurden zu diesem Zweck drei unterschiedliche Proben erstellt und deren Ergebnisse miteinander verglichen. Als erste Probe wurde Referenzzement CEM I 42,5 R verwendet. Die zweite Probe hatte eine Zusammensetzung von 70 % Referenzzement und 30 % Quarzsand, Fraktion 0-2 mm, wobei der Quarzsand als nichtreaktive inerte Gesteinskörnung verwendet wurde. Die dritte Probe bestand aus 70 % Referenzzement und 30 % LDS-Bindemittel. Hierbei wurde das LDS-Bindemittel auf eine spezifische Oberfläche von 4000 cm$^2$/g Blaine gemahlen.

Aus den in Figur 2 dargestellten Ergebnissen dieser Untersuchung geht hervor, dass die Probe 3 mit dem LDS-Bindemittel über dem Festigkeitsniveau der Vergleichsprobe 2 mit Quarzsand liegt. Hieraus kann gefolgert werden, dass bereits nach 2 Tagen das LDS-Bindemittel einen eigenständigen Festigkeitsbeitrag liefert. Nach 7 Tagen hat die Probe 3 mit LDS-Bindemittel das Festigkeitsniveau des Referenzzementes beinahe erreicht, und nach 28 Tagen sogar übertroffen.

Zusammenfassend kann festgehalten werden, dass es durch das erfindungsgemäße Verfahren möglich ist, aus Stahlwerksschlacken Eisen rückzugewinnen und ein hydraulisches mineralisches Bindemittel herzustellen, welches ein überraschend gutes Erhärtungsvermögen aufweist.

**Patentansprüche**

1. Verfahren zur Aufbereitung von Stahlwerkschlacken zum Herstellen eines hydraulischen mineralischen Bindemittels mit hohem Erhärtungspotential und zum Rückgewinnen von Eisen, mit den Schritten:

   Bereitstellen eines Aufgabeproduktes, welches Stahlwerkschlacke mit Eisenverbindungen, insbesondere in oxydischer Form, und MnO aufweist, wobei das MnO in der Stahlwerkschlacke enthalten sein kann,
   Verarbeiten des Aufgabeproduktes als Schmelze,
   Einbringen von Reduktionsmittel in die Schmelze zum Reduzieren der Eisenverbindungen, um im mineralischen Schmelzanteil einen Kalkstandard zwischen 90 und 110 zu erreichen, wobei das Einbringen des Reduktionsmittels in einer nicht-oxidierenden Atmosphäre durchgeführt wird,
   langsames Abkühlen, wobei die Schmelze in frühestens 15 min erstarrt,
   mechanisches Abtrennen von elementarem Eisen aus der erstarrten Schmelze, und
   anschließendes Zuführen der erstarrten Schmelze, welche einen verminderten Eisengehalt aufweist, einer Verwendung als hydraulisches mineralisches Bindemittel.

2. Verfahren nach Anspruch 1,
   **dadurch gekennzeichnet,**
   **dass** das Aufgabeprodukt 0,1 bis 10 M.-% MnO aufweist.

3. Verfahren nach einem der Ansprüche 1 oder 2,
   **dadurch gekennzeichnet,**
   **dass** in dem Aufgabeprodukt bis zu 5 M.-% $Al_2O_3$ und/oder 30-50 M.-% CaO und/oder 10 bis 20 M.-% $SiO_2$ enthalten sind.

4. Verfahren nach einem der Ansprüche 1 bis 3,
   **dadurch gekennzeichnet,**
   **dass** die Schmelze vor und/oder während der Reduktion eine Temperatur von etwa 1600°C bis etwa 1800°C hat.

5. Verfahren nach einem der Ansprüche 1 bis 4,
   **dadurch gekennzeichnet,**
   **dass** die nicht-oxidierende Atmosphäre eine reduzierende Atmosphäre ist.

6. Verfahren nach einem der Ansprüche 1 bis 5,
   **dadurch gekennzeichnet,**
   **dass** als Reduktionsmittel Kohlenstoff, Silizium und/oder andere Metalle oder Halbmetalle verwendet werden.

7. Verfahren nach einem der Ansprüche 1 bis 6,
   **dadurch gekennzeichnet,**
   **dass** zumindest ein Teil des Reduktionsmittels in die Schmelze eingeblasen wird.

8. Verfahren nach Anspruch 7,
   **dadurch gekennzeichnet,**
   **dass** das in die Schmelze eingeblasene Reduktionsmittel mittels eines Schutzgas-Stroms eingeblasen wird.

9. Verfahren nach einem der Ansprüche 1 bis 8,
   **dadurch gekennzeichnet,**
   **dass** in die Schmelze Borax eingebracht wird.

10. Verfahren nach einem der Ansprüche 1 bis 9,
    **dadurch gekennzeichnet,**
    **dass** nach dem Reduzieren und vor dem Erstarren der Schmelze flüssiges elementares Eisen abgetrennt wird.

11. Verfahren nach einem der Ansprüche 1 bis 10,
    **dadurch gekennzeichnet,**
    **dass** die Schmelze nach spätestens 4 h erstarrt ist.

12. Verfahren nach einem der Ansprüche 1 bis 11,

**dadurch gekennzeichnet,**
**dass** das definierte Abkühlen in Abkühlbehältnissen erfolgt.

13. Verfahren nach einem der Ansprüche 1 bis 12,
**dadurch gekennzeichnet,**
**dass** das mechanische Abtrennen des elementaren Eisens mittels eines Mahlprozesses und eines Sichtprozesses erfolgt.

**Claims**

1. Method for processing steel slag to produce a hydraulic mineral binder with high hardening potential and to recover iron, comprising the steps:

   - providing a feed product comprising steel slag with iron compounds, in particular in oxide form, and MnO, wherein the MnO may be contained in the steel slag,
   - processing the feed product as melt,
   - incorporating reducing agent into the melt to reduce the iron compounds in order to achieve a lime saturation factor in the mineral melt part of between 90 and 110, wherein the incorporation of the reducing agent is carried out in a non-oxidising atmosphere,
   - slow cooling, wherein the melt solidifies in 15 minutes at the earliest,
   - mechanical separation of elementary iron from the solidified melt, and
   - subsequent supply of the solidified melt with a reduced iron content for use as hydraulic mineral binder.

2. Method according to claim 1,
   **characterised in that**
   the feed product has 0.1 to 10 wt. % of MnO.

3. Method according to one of the claims 1 or 2,
   **characterised in that**
   up to 5 wt. % of $Al_2O_3$ and / or 30-50 wt. % of CaO and / or 10 to 20 wt. % of $SiO_2$ are contained in the feed product.

4. Method according to one of the claims 1 to 3,
   **characterised in that**
   the melt has a temperature of approximately 1600°C to approximately 1800°C before and / or during the reduction.

5. Method according to one of the claims 1 to 4,
   **characterised in that**
   the non-oxidising atmosphere is a reducing atmosphere.

6. Method according to one of the claims 1 to 5,
   **characterised in that**
   carbon, silicon and / or other metals or semi-metals are used as reducing agents.

7. Method according to one of the claims 1 to 6,
   **characterised in that**
   at least part of the reducing agent is blown into the melt.

8. Method according to claim 7,
   **characterised in that**
   the reducing agent blown into the melt is blown in by means of an inert gas flow.

9. Method according to one of the claims 1 to 8,
   **characterised in that**
   borax is incorporated into the melt.

10. Method according to one of the claims 1 to 9,
    **characterised in that**

liquid elementary iron is separated after the reduction and before solidification of the melt.

11. Method according to one of the claims 1 to 10,
**characterised in that**
the melt has solidified after 4 hours at the latest.

12. Method according to one of the claims 1 to 11,
**characterised in that**
the defined cooling takes place in cooling receptacles.

13. Method according to one of the claims 1 to 12,
**characterised in that**
the mechanical separation of the elementary iron takes place by means of a grinding process and a classifying process.

**Revendications**

1. Procédé pour traiter des scories d'aciérie dans le but de produire un liant hydraulique minéral possédant un pouvoir de durcissement élevé et pour récupérer du fer, présentant les étapes suivantes:

préparer un produit de charge qui comporte de la scorie d'aciérie avec des composés du fer, en particulier sous la forme d'oxydes, et du MnO, dans lequel le MnO peut être contenu dans la scorie d'aciérie,
mettre en œuvre le produit de charge sous la forme d'un bain fondu,
introduire un agent réducteur dans le bain fondu dans le but réduire les composés du fer, afin d'atteindre dans la partie fondue minérale un niveau de chaux qui est compris entre 90 et 110, dans lequel on introduit l'agent réducteur dans une atmosphère non oxydante, et refroidir lentement, le bain fondu se solidifiant en au moins 15 minutes,
séparer mécaniquement le fer élémentaire du bain fondu solidifié, et
conduire ensuite le bain fondu solidifié, qui présente une teneur en fer réduite, en vue d'une utilisation comme liant hydraulique minéral.

2. Procédé selon la revendication 1, **caractérisé en ce que** le produit de charge présente entre 0,1 % en masse et 10 % en masse de MnO.

3. Procédé selon l'une des revendications 1 ou 2, **caractérisé en ce que** le produit de charge contient jusqu'à 5 % en masse de $Al_2O_3$ et/ou entre 30 % en masse et 50 % en masse de CaO et/ou entre 10 % en masse et 20 % en masse de $SiO_2$.

4. Procédé selon l'une quelconque des revendications 1 à 3, **caractérisé en ce que** le bain fondu présente, avant et/ou pendant la réduction, une température qui est comprise entre environ 1600°C et environ 1800°C.

5. Procédé selon l'une quelconque des revendications 1 à 4, **caractérisé en ce que** l'atmosphère non oxydante est une atmosphère réductrice.

6. Procédé selon l'une quelconque des revendications 1 à 5, **caractérisé en ce que** l'on utilise comme agent réducteur du carbone, du silicium ou d'autres métaux ou semi-métaux.

7. Procédé selon l'une quelconque des revendications 1 à 6, **caractérisé en ce que** l'on insuffle au moins une partie de l'agent réducteur dans le bain fondu.

8. Procédé selon la revendication 7, **caractérisé en ce que** l'on insuffle l'agent réducteur insufflé dans le bain fondu au moyen d'un courant de gaz protecteur.

9. Procédé selon l'une quelconque des revendications 1 à 8, **caractérisé en ce que** l'on introduit du borax dans le bain fondu.

10. Procédé selon l'une quelconque des revendications 1 à 9, **caractérisé en ce que** l'on sépare le fer élémentaire liquide après la réduction et avant la solidification du bain fondu.

11. Procédé selon l'une quelconque des revendications 1 à 10, **caractérisé en ce que** le bain fondu est solidifié au plus tard après 4 h.

12. Procédé selon l'une quelconque des revendications 1 à 11, **caractérisé en ce que** le refroidissement est effectué dans des cuves de refroidissement.

13. Procédé selon l'une quelconque des revendications 1 à 12, **caractérisé en ce que** l'on effectue la séparation mécanique du fer élémentaire au moyen d'un processus de broyage et d'un processus de criblage.

Fig. 1

```
┌─────────────────────────┐
│        Schritt I        │
└─────────────────────────┘
             │
┌─────────────────────────┐
│        Schritt II       │
└─────────────────────────┘
             │
┌─────────────────────────┐
│       Schritt III       │
└─────────────────────────┘
             │
┌─────────────────────────┐
│        Schritt IV       │
└─────────────────────────┘
             │
┌─────────────────────────┐
│        Schritt V        │
└─────────────────────────┘
             │
┌─────────────────────────┐
│        Schritt VI       │
└─────────────────────────┘
```

Fig. 2

EP 2 892 860 B1

□ Referenzzement (Probe 1)

☑ Refernzzement + 30 M.-% Quarzmehl (Probe 2)

▒ Refernzzement + 30 M.-% LDS-Bindemittel (Probe 3)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1370501 B1
- EP 1697271 B1
- WO 9507365 A
- WO 9624696 A
- DE 2829370 A1
- DE 2728289
- WO 2011107124 A1

**In der Beschreibung aufgeführte Nicht-Patentliteratur**

- **TSAKIRIDIS, P.E et al.** Utilization of steel slag for Portland cement clinker production. *Jour. of Hazadous Materials,* 2008, vol. 152, 805-811